# FASCICULE DE BREVET EUROPEEN

(11) **EP 0 537 404 B1**
(45) Date de publication et mention de la délivrance du brevet: **10.04.1996**
(21) Numéro de dépôt: 91630084.1
(22) Date de dépôt: 14.10.1991
(51) Int. Cl.: G07F 7/06, B62B 3/10

(54) **Poignée pour chariot de transport de marchandises**
Schiebegriffvorrichtung für Einkaufswagen
Pusher handle construction for shopping trolleys

(43) Date de publication de la demande: 21.04.1993
(73) Titulaire: VENDORET HOLDING S.A., L-5884 Luxemburg-Hesperange (LU)
(72) Inventeur: Merchel, Horst, W-7120 Bietigheim-Bissingen (DE)
(74) Mandataire: Weydert, Robert

(56) Documents cités:
- EP-A- 0 421 101
- DE-A- 3 714 115
- FR-A- 2 565 008

## Description

L'invention concerne une poignée avec dispositif de serrure à monnayeur pour un chariot de transport de marchandises du type utilisé dans les magasins pour le transport des achats et dans les gares et aéroports pour le transport des bagages, la poignée comportant un logement transversal pour le dispositif de serrure à monnayeur, ledit logement étant éventuellement fermé par au moins une cloison démontable ou arrachable et comportant des moyens de retenue dudit dispositif de serrure à monnayeur.

Pour faciliter la disponibilité de tels chariots en des emplacements accessibles aux utilisateurs, on a proposé (DE-C-2554916) de munir ces chariots d'un dispositif de serrure à monnayeur permettant de les accoupler entre eux ou à une tête de station, la libération d'un chariot se faisant par introduction d'une pièce de consigne dans la serrure à monnayeur, laquelle est ainsi libérée de la serrure à monnayeur du chariot auquel elle était accouplée ou de la tête de station. Lorsque l'utilisateur accouple à nouveau la serrure du chariot à celle d'un autre chariot ou à la tête de station, il récupère sa pièce de consigne.

Ce dispositif connu a reçu un grand succès commercial du fait que, en encourageant le rassemblement des chariots après utilisation en files débutant aux têtes de station, les chariots non utilisés sont mis à la disposition de nouveaux utilisateurs et n'encombrent plus les allées et les garages.

Les dispositifs de serrure à monnayeur connus sont rapportés sur le côté du chariot ou sur sa poignée. Ce montage est coûteux et, en outre, la serrure à monnayeur forme une saillie gênante et parfois dangereuse.

Pour pallier ce problème, on a proposé (DE-C-3714115 - qui concerne une poignée avec dispositif de serrure à monnayeur selon la partie précaractérisante de la première revendication indépendante) de munir le dispositif de serrure à monnayeur d'ailes latérales dont les extrémités sont fixées au chariot, les ailes formant des poignées de manoeuvre du chariot. Le dispositif connu présente l'inconvénient de nécessiter, en cas de panne ou de rupture, un démontage de l'ensemble du dispositif de serrure à monnayeur aves ces ailes et éventuellement son remplacement. Il en résulte un coût d'entretien très élevé. Il en est de même dans le cas où l'on désire utiliser une pièce de consigne différente, par exemple lorsque la pièce pour laquelle est prévue la serrure à monnayeur est démonétisée.

On a encore proposé (EP-A-0 421 101) un dispositif de serrure à monnayeur du type précédent dans lequel la poignée présente une zone en forme de boite formant le boîtier d'un dispositif de serrure à consigneur. Ce dispositif connu présente les mêmes inconvénients que celui décrit dans DE-C-3 714 115.

La présente invention vise en conséquence à perfectionner les poignées des chariots de transport pour supprimer les inconvénients mentionnés ci-dessus, en particulier en permettant un montage et un entretien rapides et peu coûteux des dispositifs de serrure à monnayeur et, en outre, en autorisant l'utilisation de la poignée sans un tel dispositif.

A cet effet, la poignée avec dispositif de serrure à monnayeur selon l'invention est caractérisée en ce que le dispositif de serrure à monnayeur est disposé dans un boîtier séparé de la poignée et conçu en vue d'être introduit dans ledit logement transversal de la poignée pour y être retenu de façon amovible par lesdits moyens de retenue.

La poignée selon l'invention peut donc être utilisée, si l'acheteur le désire, sans dispositif de serrure à monnayeur. Lorsqu'on désire équiper le chariot d'un dispositif de serrure à monnayeur, il suffit de démonter ou d'arracher éventuellement la ou les cloisons de fermeture du logement, d'y monter la serrure à monnayeur et de la fixer dans ce logement grâce aux moyens de rétention prévus à cet effet. La serrure à monnayeur ne modifie pas l'encombrement de la poignée et, du fait qu'elle n'est pas exposée à la vue, elle peut être réalisée avec un boîtier économique ne nécessitant pas de traitement de surface onéreux.

De préférence, la poignée présente une section aplatie de manière à former sur sa surface supérieure une zone d'affichage publicitaire ou décorative, ce qui améliore l'esthétique et la rentabilité de la poignée.

Salon une forme de réalisation de l'invention, le logement pour le dispositif de serrure à monnayeur est ouvert à ses deux extrémités afin de découvrir à une extrémité la fente d'introduction d'une pièce de consigne de la serrure et/ou de permettre le passage à travers l'autre extrémité d'une clé d'un autre dispositif de serrure à monnayeur et/ou l'accrochage de la clé du dispositif de serrure à monnayeur monté dans ledit logement.

Avantageusement dans ce cas, ledit logement et le boîtier du dispositif ont des formes complémentaires telles que l'introduction du dispositif de serrure à monnayeur ne puisse se faire que par l'une des ouvertures du logement, ce qui forme en soi un premier arrêt de retenue du dispositif de serrure à monnayeur.

Les moyens de retenue du dispositif de serrure à monnayeur dans le logement peuvent revêtir les formes les plus diverses. Selon une forme de réalisation de l'invention, ils comprennent des vis de sûreté. Selon une variante de l'invention, ils comprennent des cliquets pouvant être effacés au moyen d'outils spéciaux. Dans ce dernier cas, le montage du dispositif de serrure à monnayeur se fait par simple enfoncement et encliquetage. Son démontage pour entretien ou échange ne peut être effectué qu'au moyen des outils spéciaux prévus à cet effet. L'invention sera bien comprise à la lecture de la description suivante faite en se référant au dessin annexé dans lequel :
- La figure 1 est une vue schématique de l'avant, en perspective, d'une partie d'une poignée selon un exemple de réalisation de l'invention équipée d'un dispositif de serrure à monnayeur, et
- La figure 2 est une vue schématique de l'arrière, en perspective d'une partie de la poignée de la figure 1.

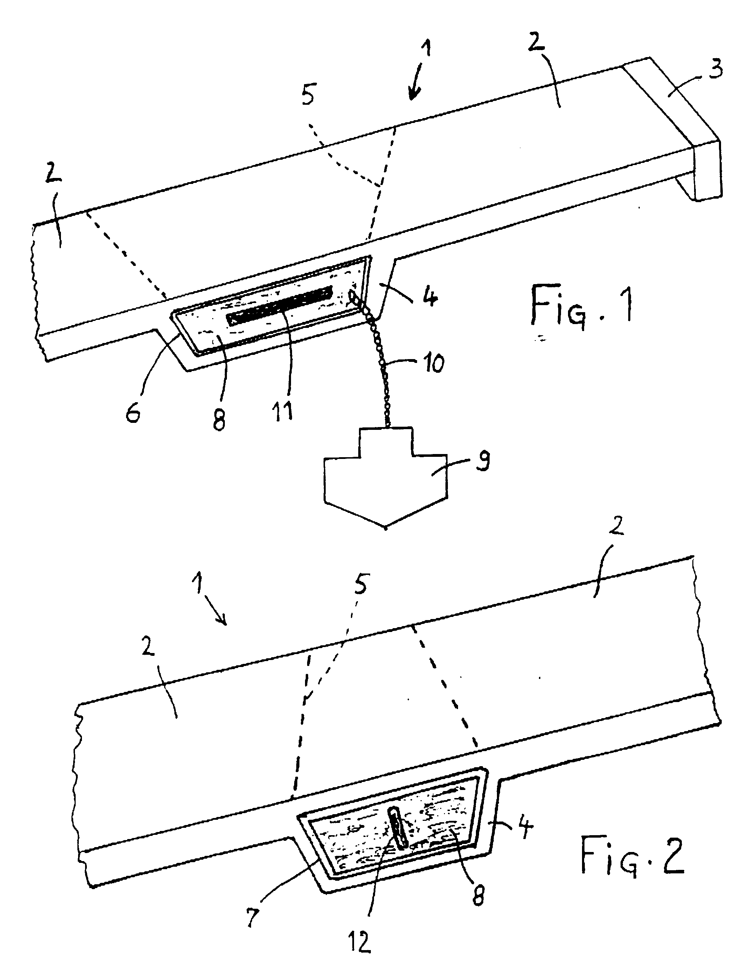

La poignée 1 représentée au dessin comprend deux ailes latérales 2 terminées par un organe 3 de montage sur un chariot (non représenté) et entourant une portion centrale épaissie 4. La portion centrale 4 comporte un logement transversal ouvert vers l'avant (figure 1) par une fenêtre 6 et vers l'arrière (figure 2) par une fenêtre 7. Le logement 5 se rétrécit progressivement vers l'avant et les fenêtres 6 et 7 peuvent être obturées par des cloisons démontables ou arrachables (non représentées).

La poignée 1 peut être utilisée comme une poignée ordinaire, les fenêtres 6 et 7 étant éventuellement obturées. On peut aussi prévoir de remplir le logement 5 par une pièce d'obturation (non représentée) amovible. Lorsqu'on veut équiper la poignée 1, et donc le chariot sur lequel elle est montée, il est nécessaire le cas échéant de dégager préalablement le logement 5 et les ouvertures 6 et 7. Le dispositif de serrure à monnayeur 8, dont le boîtier a une forme complémentaire de celle du logement 5, est ensuite introduit dans ce logement 5 à travers la fenêtre arrière 7, après avoir fait passer la clé 9 montée au bout d'une chaîne 10 fixée sur la face avant du boîtier.

Lorsque le dispositif 8 est en place, on le fixe au moyen de vis de sûreté ou, de préférence, il se verrouille sur un ou plusieurs cliquets (non représentés) en saillie à l'intérieur du logement 5 et qui ne peuvent être effacés qu'au moyen d'un outil spécial.

Dans cette position, une fente 11 d'introduction de la clé 9 d'un dispositif de serrure à monnayeur monté sur un autre chariot ou une tête de station (non représentés) est accessible à travers la fenêtre avant 6. Une fente 12 d'introduction d'une pièce de consigne est accessible à travers la fenêtre arrière 7.

La conicité du logement 5 assure que le dispositif 8 ne peut pas être extrait à force à travers la fenêtre avant 6, en particulier par traction sur la chaîne 10.

Le dispositif de consignation à monnayeur 8 est de préférence un boîtier métallique très solide dont seules les faces antérieures et postérieures sont visibles et doivent subir un traitement de surface.

Le corps de la poignée 1 est de préférence en une matière synthétique résistante et est moulée d'une seule pièce avec les organes de montage 3 et des nervures de raidissement (non représentées). La poignée 1 comporte sur toute sa longueur une surface plane permettant l'apposition de publicités et/ou de décors et/ou d'un mode d'emploi du dispositif 8.

Le logement 5 peut occuper toute position transversale voulue et peut en particulier être vertical ou peu incliné sur la verticale au lieu d'être horizontal comme dans l'exemple représenté.

Au lieu de présenter une surépaisseur centrale 4 pour le logement 5, la poignée 1 peut avoir une section sensiblement uniforme sur toute sa longueur.

## Revendications

1. Poignée avec dispositif de serrure à monnayeur pour un chariot de transport de marchandises du type utilisé dans les magasins pour le transport des achats et dans les gares et aéroports pour le transport des bagages, la poignée comportant un logement transversal (5) pour le dispositif de serrure à monnayeur (8), ledit logement (5) étant éventuellement fermé par au moins une cloison démontable ou arrachable et comportant des moyens de retenue dudit dispositif de serrure à monnayeur (8), caractérisée en ce que le dispositif de serrure à monnayeur (8) est disposé dans un boîtier séparé de la poignée (1) et conçu en vue d'être introduit dans ledit logement transversal (5) de la poignée (1) pour y être retenu de façon amovible par lesdits moyens de retenue.

2. Poignée avec dispositif de serrure à monnayeur selon la revendication 1, caractérisée en ce que la poignée (1) présente une section aplatie de manière à former sur sa surface supérieure une zone d'affichage publicitaire ou décorative.

3. Poignée avec dispositif de serrure à monnayeur selon l'une des revendications 1 et 2, caractérisée en ce que ledit logement (5) pour le dispositif de serrure à monnayeur (8) est ouvert (6, 7) à ses deux extrémités afin de découvrir à une extrémité la fente (12) d'introduction d'une pièce de consigne de la serrure (8) et/ou de permettre le passage à travers l'autre extrémité d'une clé (9) d'un autre dispositif de serrure à monnayeur (8) et/ou l'accrochage de la clé (9) du dispositif de serrure à monnayeur (8) monté dans ledit logement (5).

4. Poignée avec dispositif de serrure à monnayeur selon la revendication 3, caractérisée en ce que ledit logement et le boîtier du dispositif (8) ont des formes complémentaires telles que l'introduction du dispositif de serrure à monnayeur (8) ne puisse se faire que par l'une des ouvertures (6, 7) du logement (5).

5. Poignée avec dispositif de serrure à monnayeur selon l'une des revendications 1 à 4, caractérisée en ce que les moyens de retenue du dispositif de serrure à monnayeur (8) comprennent des vis de sûreté.

6. Poignée avec dispositif de serrure à monnayeur selon l'une des revendications 1 à 4, caractérisée en ce que les moyens de retenue du dispositif de serrure à monnayeur (8) dans le logement (5) comprennent des cliquets pouvant être effacés au moyen d'outils spéciaux.

## Patentansprüche

1. Griff mit Münzschloßeinrichtung für einen Wagen zum Transport von Waren des Typs zur Benutzung in Geschäftshäusern für den Transport der Einkäufe und in Bahnhöfen und Flughäfen zum Transport von Gepäck, wobei der Griff einen querverlaufenden Aufnahmeraum (5) für die Münzschloßvorrichtung (8) aufweist, welcher Aufnahmeraum (5) gegebenenfalls durch mindestens eine abmontierbare oder wegreißbare Wand verschlossen ist sowie mit Haltemitteln für die Münzschloßvorrichtung (8) versehen ist, dadurch gekennzeichnet, daß die Münzschloßvorrichtung (8) innerhalb eines vom Griff (1) getrennten Gehäuses angeordnet ist, das gestaltet ist, um in den querverlaufenden Aufnahmeraum (5) des Griffes (1) eingeführt und in demselben durch die Haltemittel entfernbar zurückgehalten zu werden.

2. Griff mit Münzschloßvorrichtung nach Anspruch 1, dadurch gekennzeichnet, daß der Griff (1) einen abgeflachten Abschnitt aufweist, um auf seiner oberen Seite einen Werbe- oder Verzierungsbereich vorzusehen.

3. Griff mit Münzschloßvorrichtung nach einem der Ansprüche 1 und 2, dadurch gekennzeichnet, daß der Aufnahmeraum (5) für die Münzschloßvorrichtung (8) an seinen beiden Enden (6, 7) offen ist, um an einem Ende den Schlitz (12) zum Einführen der Pfandmünze des Schlosses (8) freizulassen und/oder um das Hindurchführen durch das andere Ende eines Schlüssels (9) einer anderen Münzschloßvorrichtung (8) zu erlauben und/oder das Anhängen des Schlüssels (9) der im Aufnahmeraum (5) angeordneten Münzschloßvorrichtung (8) zu gestatten.

4. Griff mit Münzschloßvorrichtung nach Anspruch 3, dadurch gekennzeichnet, daß der Aufnahmeraum und das Gehäuse der Vorrichtung (8) komplementare Formen aufweisen, derart daß das Einführen der Münzschloßvorrichtung (8) nur von einer der Öffnungen (6, 7) des Aufnahmeraumes (5) aus erfolgen kann.

5. Griff mit Münzschloßvorrichtung nach einem der Ansprüche 1 bis 4, dadurch gekennzeichnet, daß die Haltemittel zum Zurückhalten der Münzschloßvorrichtung (8) Sicherheitsschrauben umfassen.

6. Griff mit Münzschloßvorrichtung nach einem der Ansprüche 1 bis 4, dadurch gekennzeichnet, daß die Haltemittel zum Zurückhalten der Münzschloßvorrichtung (8) in dem Aufnahmeraum (5) Sperrklinken umfassen, welche mittels Spezialwerkzeugen in Freigabestellung zu bringen sind.

## Claims

1. Handle with a coin-operated locking device for a trolley for transporting goods of the type used in retail stores for transporting purchases and in railway stations and airports for transporting luggage, said handle comprising a transverse housing (5) for the coin-operated locking device (8), said housing (5) being optionally closed by means of at least one removable or pull-off wall and comprising holding means for said coin-operated locking device (8), characterised in that the coin-operated locking device (8) is disposed in a case separate from the handle (1) and is designed so that it may be inserted into said transverse housing (5) of the handle (1) so as to be detachably held by said holding means.

2. Handle with a coin-operated locking device according to Claim 1, characterised in that the handle (1) has a flattened profile on its upper surface, thus forming a zone for advertising material or decorative purposes.

3. Handle with a coin-operated locking device according to one of Claims 1 and 2, characterised in that said housing (5) for the coin-operated locking device (8) is open (6, 7) at both ends to reveal at one end the slot (12) for inserting a deposit coin into the lock (8) and/or to allow a key (9) of another coin-operated locking device (8) to pass through and/or to allow catch engagement of the key (9) of the coin-operated locking device (8) mounted in said housing (5).

4. Handle with a coin-operated locking device according to Claim 3, characterised in that said housing (5) and the case of the device (8) correspond in shape so that the coin-operated locking device (8) can only be inserted via one of the openings (6, 7) in the housing (5).

5. Handle with a coin-operated locking device according to one of Claims 1 to 4, characterised in that the means for holding the coin-operated locking device (8) comprise safety screws.

6. Handle with a coin-operated locking device according to one of Claims 1 to 4, characterised in that the means for holding the coin-operated locking device (8) in the housing (5) comprise catch elements which can be disengaged by means of special tools.
